Europäisches Patentamt

European Patent Office

Office européen des brevets

(19)

(11) Veröffentlichungsnummer: **0 268 739**
**A2**

(12) # EUROPÄISCHE PATENTANMELDUNG

(21) Anmeldenummer: **87110036.8**

(22) Anmeldetag: **11.07.87**

(51) Int. Cl.⁴: **H04M 1/274**

(30) Priorität: **25.11.86 DE 3640272**

(43) Veröffentlichungstag der Anmeldung:
**01.06.88 Patentblatt 88/22**

(84) Benannte Vertragsstaaten:
**AT DE FR GB IT SE**

(71) Anmelder: **ROBERT BOSCH GMBH**
**Postfach 50**
**D-7000 Stuttgart 1(DE)**

(72) Erfinder: **Siegle, Gert, Prof. Dr.**
**Kirchweg 7**
**D-1000 Berlin 38(DE)**

(74) Vertreter: **Schmidt, Hans-Ekhardt**
**Robert Bosch GmbH Geschäftsbereich**
**Elektronik Patent- und Lizenzabteilung**
**Forckenbeckstrasse 9-13**
**D-1000 Berlin 33(DE)**

(54) **Verfahren zum Speichern und Wählen von Rufnummern.**

(57) Es wird ein Verfahren zum Speichern und Wählen von Rufnummern vorgeschlagen, das mit einem vergleichsweise geringen technischen und wirtschaftlichen Aufwand auskommt. Zu diesem Zweck werden die von einem Teilnehmer gesprochenen, zu speichernden Namen mittels eines Vocoders (14) in Digitalsignale umgewandelt. Diese werden in einem Halbleiterspeicher (13) gespeichert. Die zu den Namen gehörenden Rufnummern gibt der Teilnehmer mittels einer Tastatur (10) ein, die die jeweils gewählte Rufnummer in digitalisierter Form in den Halbleiterspeicher überträgt. Durch Betätigen einer Taste (17) kann der Teilnehmer nacheinander aus dem Halbleiterspeicher die gespeicherten Namen abrufen und über den Vocoder (14) hörbar machen. Hört der Teilnehmer den gewünschten Namen, so veranlaßt er durch Betätigen einer weiteren Taste (19) den Halbleiterspeicher (13) zur Abgabe der zu dem Namen gehörenden Rufnummer.

## Verfahren zum Speichern und Wählen von Rufnummern

### Stand der Technik

Die Erfindung geht von einem Verfahren nach der Gattung des Hauptanspruchs aus.

Es ist ein Fernsprechsystem bekannt, bei dem häufig benötigte mehrstellige Rufnummern mittels Kurzwahl gewählt werden. Dabei genügt beispielsweise die Wahl einer einzigen Ziffer der Ziffern 0 bis 9, um einen gewünschten Teilnehmer von zehn verschiedenen Teilnehmern zu rufen. Sollen jedoch zum Beispiel bis zu hundert Teilnehmer unterschieden werden, dann muß der rufende Teilnehmer bereits zwei Ziffern wählen, die er einem Verzeichnis entnehmen muß, in welchem die Namen der Teilnehmer und die zugehörigen Kurzwahl-Ziffern enthalten sind.

Es ist weiterhin ein Wahlverfahren bekannt (Funkschau, 1986, Heft 15, Seite 48), bei dem nach einmaliger Speicherung von Namen und zugehörigen Rufnummern das Anrufen eines Teilnehmers dadurch ausgelöst wird, daß nur der Name des gewünschten Teilnehmers gesprochen zu werden braucht, wobei dann eine Spracherkennungsschaltung den gesprochenen Namen automatisch erkennt und das Aussenden der zugehörigen Rufnummer auslöst. Dieses Verfahren setzt jedoch einen hohen technischen und wirtschaftlichen Aufwand voraus.

### Vorteile der Erfindung

Das erfindungsgemäße Verfahren mit den kennzeichnenden Merkmalen des Hauptanspruchs hat den Vorteil, daß der technische und wirtschaftliche Aufwand zur Realisierung erheblich verringert werden kann, insbesondere dann, wenn der Vocoder die Sprachsignale auf eine verhältnismäßig geringe Datenmenge (zum Beispiel 2,4 kbit/s) reduziert.

Durch die in den Unteransprüchen aufgeführten Maßnahmen sind vorteilhafte Weiterbildungen und Verbesserungen des in dem Hauptanspruch angegebenen Verfahrens möglich. Besonders vorteilhaft ist ein erfindungsgemäßes Verfahren, bei dem jeder als Digitalsignal gespeicherte Name nach dem Einspeichern in den Halbleiterspeicher automatisch oder durch Betätigen einer Taste über den Vocoder hörbar gemacht wird. Dadurch kann der Teilnehmer feststellen, ob der von ihm eingegebene und gespeicherte Name gut zu verstehen ist oder nicht. Reicht die Sprachverständlichkeit nicht aus, so wiederholt er die Eingabe des Namens noch einmal.

### Zeichnung

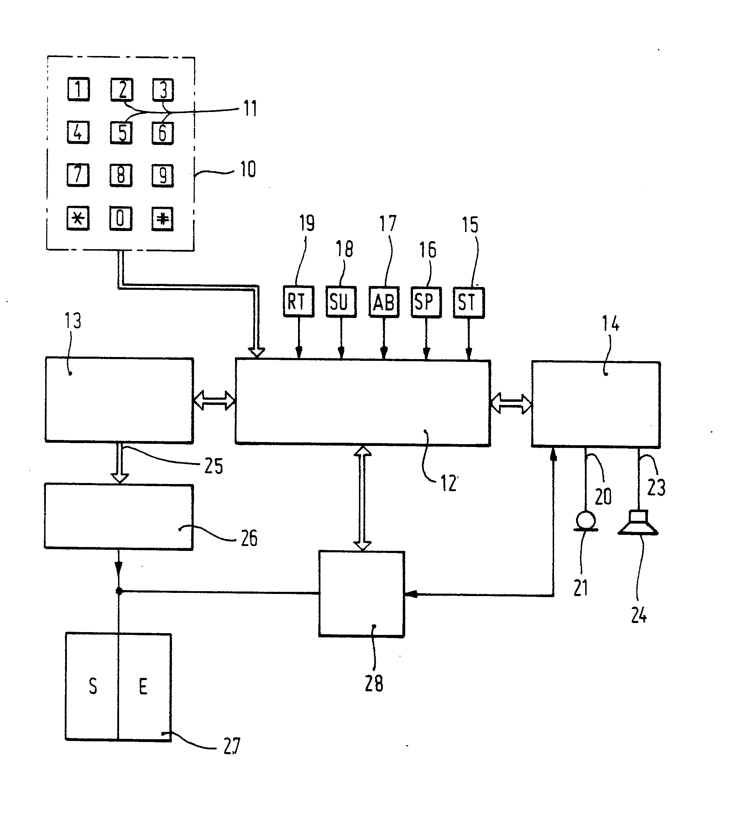

Ein Ausführungsbeispiel zur Realisierung des erfindungsgemäßen Verfahrens ist in der Zeichnung anhand einer einzigen Figur dargestellt, die ein Blockschaltbild zeigt.

### Beschreibung der Erfindung

In der Figur bezeichnet 10 eine zum Beispiel zu einem Funktelefon gehörende Wahltastatur mit Tasten 11. Die Wahltastatur 10 steht mit einer elektronischen Steuerungsschaltung 12 in Verbindung, die wechselseitig mit einem Halbleiterspeicher 13 und einem Vocoder 14 verbunden ist. Zu der Steuerungsschaltung 12 gehören vorzugsweise fünf Tasten, das sind zum Beispiel eine Starttaste 15, eine Speichertaste 16, eine Abruftaste 17, eine Suchtaste 18 und eine Ruftaste 19. Der Vocoder 14 weist einen NF-Eingang 20 für ein Mikrofon 21 sowie einen NF-Ausgang 23 für einen Lautsprecher 24 auf. An einen Ausgang 25 des Halbleiterspeichers 13 schließt sich ein Wahlsignalgeber 26 an, der mit dem Modulationseingang des Sendeteils eines Funksende-und -empfangsgerätes 27 in Verbindung steht. Dem Funktelefon ist vorzugsweise ein Anrufbeantworter 28 zugeordnet, der in dem Halbleitspeicher 13 gespeicherte Ansagen über den Vocoder 14 an das Funksende-und -empfangsgerät 27 weiterleitet und mit dem empfangene Sprachinformationen über den Vocoder 14 und die Steuerungsschaltung 12 in den Halbleiterspeicher 13 übertragen werden. Zu diesem Zweck muß der Halbleiterspeicher 13 bezüglich seines verfügbaren Speicherplatzes derart bemessen sein, daß er nicht nur die Namen und Rufnummern der gewünschten Teilnehmer, sondern darüber hinaus die Informationen aus dem Anrufbeantworter-Betrieb speichern kann.

Die vorstehend beschriebene Vorrichtung hat folgende Funktion.

Zunächst muß der Funkteilnehmer die für ihn wichtigen Teilnehmer mit Namen und Rufnummern speichern. Hierzu spricht er nach Betätigung der ersten Taste 15 (Starttaste) den ersten Namen in das Mikrofon 21. Der Name wird durch den vocoder 14 digitalisiert und nach Betätigung der zweiten Taste 16 (Speichertaste) in dem Halbleiterspeicher 13 abgelegt. Anschließend kann der in dem Halbleiterspeicher gespeicherte Name entweder automatisch oder nach Betätigung einer dritten Taste 17 (Abruftaste) über den Vocoder 14 mit dem Lautsprecher 24 hörbar gemacht werden. Nur in dem Fall, daß der wiedergegebene Name schwer verständlich ist, wird der Teilnehmer das Einspeichern des Names wiederholen.

Ist der erste Name richtig gespeichert, dann gibt der Teilnehmer die zu dem Namen gehörende Rufnummer durch Betätigen der entsprechenden Tasten 11 in die Wahltastatur 10 ein, und die einzelnen Ziffern der Rufnummern werden nach Betätigen der zweiten Taste 16 (Speichertaste) in digitaler Form ebenfalls in dem Halbleiterspeicher 13 gespeichert. Das Speichern von Name und Rufnummer wird vorzugsweise durch eine von der Steuerungsschaltung 12 bereitgestellte Platznummer ergänzt, die ein eventuell später notwendig werdendes Umsortieren von Namen und Rufnummern vereinfacht und gegebenenfalls eine Prioritätenverteilung zuläßt; zum Beispiel Teilnehmer 1 ... 10 = sehr wichtige, 11 ... 20 = wichtige, 20 und ff. = weniger wichtige Teilnehmer. Anschließend speichert der Teilnehmer nacheinander den zweiten bis n-ten Namen mit jeweils zugehöriger Rufnummer in analoger Weise in den Halbleiterspeicher 13 ein. Sind dann in dem Halbleiterspeicher alle gewünschten Teilnehmernamen und -rufnummern gespeichert, so steht dem Funkteilnehmer ein akustisches Teilnehmerverzeichnis zur Verfügung, das er durch Betätigen der vierten Taste 18 (Suchtaste) "durchblättern" kann. Dabei wird vorzugsweise dafür gesort, daß das Durchblättern wahlweise vorwärts oder rückwärts sowie mit unterschiedlicher Geschwindigkeit erfolgen kann. Hierzu sind unter Umständen weitere Tasten erforderlich. Die Maßnahmen für das Durchblättern des akustischen Teilnehmerverzeichnisses sind dem Fachmann aus der Technik der Digitaluhren geläufig. Hat der Teilnehmer beim Abrufen des Teilnehmerverzeichnisses den gewünschten Teilnehmernamen im Lautsprecher 24 gehört, dann läßt er die vierte Taste 18 los. Betätigt er dann die fünfte Taste 19 (Ruftaste), so veranlaßt die Steuerungsschaltung 12, daß der Halbleiterspeicher 13 die zu dem Namen gehörende digitalisierte Rufnummer an dem Ausgang 25 abgibt. Der mit dem Ausgang 25 verbundene Wahlsignalgeber 26 erzeugt aus der digitalen Rufnummer ein Rufsignal entsprechend dem in dem Funktelefonsystem vorgesehenen Rufverfahren und leitet das Rufsignal an den Sendeteil des Funksende-und -empfangsgerätes 27 weiter.

In dem vorstehend beschriebenen Ausführungsbeispiel sind die Tasten 15 bis 19 zusätzliche Tasten zu der Wähltastatur 10. Die Funktionen der Tasten 15 bis 19 können gegebenenfalls die Tasten 11 durch Doppeltbelegung übernehmen.

Als Vocoder 14 eignet sich beispielsweise ein LPC-Vocoder mit einer Bitrate von 2,4 kbit/s und als Halbleiterspeicher eine E²PROM-Schaltung.

**Ansprüche**

1. Verfahren zum Speichern und Wählen von Rufnummern unter Verwendung eines Namen-und Rufnummernspeichers, dadurch gekennzeichnet, daß die von einem Funkteilnehmer gesprochenen, zu speichernden Namen mittels eines Vocoders (14) in Digitalsignale umgewandelt werden, daß die Digitalsignale in einem Halbleiterspeicher (13) gespeichert werden, daß die zu den Namen gehörenden Rufnummern durch den Teilnehmer in eine Tastatur (10) eingegeben und in demselben Halbleiterspeicher mit abgespeichert werden, daß die gespeicherten Namen durch Betätigen einer Taste (18) nacheinander aus dem Halbleiterspeicher abgerufen und über den Vocoder hörbar gemacht werden und daß der Teilnehmer beim Erreichen des gewünschten Names durch Betätigen einer weiteren Taste (19) den Halbleiterspeicher zur Abgabe der zu dem Namen des gewünschten Teilnehmers gehörenden Rufnummer veranlaßt.

2. Verfahren nach Anspruch 1, dadurch gekennzeichnet, daß jeder als Digitalsignal gespeicherte Name nach dem Einspeichern in den Halbleiterspeicher (13) automatisch oder durch Betätigen einer anderen Taste (17) über den Vocoder (14) hörbar gemacht wird.

3. Verfahren nach Anspruch 1 oder 2, dadurch gekennzeichnet, daß der Speicherplatz des Halbleiterspeichers (13) derart bemessen ist, daß er zusätzlich zu den Namen und Rufnummern auch Informationen eines Anrufbeantworters (28) speichert.

4. Verfahren nach Anspruch 1 oder 2, dadurch gekennzeichnet, daß der Vocoder (14) ein LPC-Vocoder ist.

5. Verfahren nach Anspruch 1 oder 2, dadurch gekennzeichnet, daß der Halbleiterspeicher ein E²PROM ist.